**Europäisches Patentamt**

**European Patent Office**

**Office européen des brevets**

(11) Veröffentlichungsnummer : **0 406 522 B1**

(12) **EUROPÄISCHE PATENTSCHRIFT**

(45) Veröffentlichungstag der Patentschrift :
23.11.94 Patentblatt 94/47

(51) Int. Cl.⁵ : **G01S 13/90**, G01S 7/00,
H01Q 1/28

(21) Anmeldenummer : **90104498.2**

(22) Anmeldetag : **09.03.90**

(54) **Radargerät mit synthetischer Apertur auf der Basis rotierender Antennen.**

(30) Priorität : **05.07.89 DE 3922086**

(43) Veröffentlichungstag der Anmeldung :
**09.01.91 Patentblatt 91/02**

(45) Bekanntmachung des Hinweises auf die
Patenterteilung :
**23.11.94 Patentblatt 94/47**

(84) Benannte Vertragsstaaten :
**ES FR GB IT NL SE**

(56) Entgegenhaltungen :
**DE-A- 3 409 809**
**FR-A- 2 400 714**
**US-A- 4 638 315**
**US-A- 4 737 788**
**PATENT ABSTRACTS OF JAPAN vol. 12, no.**
**303 (P-746)18. August 1988**

(56) Entgegenhaltungen :
**16TH EUROPEAN MICROWAVE CONF 86 8.**
**September 1986, DUBLIN ,EIRE Seiten 317 -**
**328; H. KLAUSING ET AL.: 'A MM wave Sar**
**design for helicopterapplication ( Rosar )'**
**ICASSP 88 Bd. 2, 11. April 1988, NEW YORK,**
**NY Seiten 1196 - 1199; WENBIAO , ZHENG:**
**'Radar imaging based on rotating antenna'**
**IEEE TRANSACTIONS ON AEROSPACE AND**
**ELECTRONIC SYSTEMS. Bd. AES 9, Nr. 24,Juli**
**1973, NEW YORK US Seiten 608 - 611; ROBERT**
**H. MACPHIE: 'The circular synthetic radar'**

(73) Patentinhaber : **Deutsche Aerospace AG**
**D-81663 München (DE)**

(72) Erfinder : **Klausing, Helmut**
**Kolbermoorer Strasse 14a**
**D-8032 Bad Aibling (DE)**
Erfinder : **Kaltschmidt, Horst, Prof.-Dr.**
**Nibelungenstrasse 2**
**D-8014 Neubiberg (DE)**

## Beschreibung

Die Erfindung bezieht sich auf ein Radargerät gemäß dem Oberbegriff des Patentanspruches 1.

Ein derartiges Radargerät mit synthetischer Apertur auf der Basis rotierender Antennen (ROSAR) ist aus der Zeitschrift ntz-Archiv, Band 9, 1987, Heft 1, S. 13 - 23 bekannt. Die Antennen sind hierbei an den Enden eines rotierenden Tragarmes angeordnet, z.B. an den Blattspitzen von Hubschrauberrotoren. Das Radarverfahren mit synthetischer Apertur beruht auf der Auswertung der Dopplerinformation für jeden einzelnen Punkt am Boden innerhalb der realen Antennenkeule und setzt daher eine Relativbewegung der Antenne und ein gepulstes kohärentes Radargerät voraus. Die Relativbewegung der Antenne wird bei einem ROSAR-Gerät durch die Rotatonsbewegung der Antennen gegenüber dem zu detektierenden Ziel erzeugt. Das Empfangssignal wird Puls für Puls mit einem aus der Beleuchtungsgeometrie abgeleiteten Satz von Referenzfunktionen kreuzkorreliert, wobei für jedes Entfernungselement bzw. jede Auflösezelle am Boden eine Referenzfunktion vorhanden ist. Diese rechnerintensive Verarbeitung stellt ein angepaßtes Filter dar, das zu einer höheren Querauflösung führt als es der realen Antennenkeule entspricht. Auf diese Weise kann die Auflösung mit synthetischer Apertur gegenüber der Auflösung mit realer Apertur um einen Größenordnung erhöht werden.

Sind die Antennen an den Blattspitzen eines Hubschrauberrotors angeordnet, so ist die Umlaufgeschwindigkeit an den Blattspitzen mit ca. 200 m/sec wesentlich höher als die Marschgeschwindigkeit des Hubschraubers über Grund. Die Dopplerinformation, die aufgrund der Rotationsgeschwindigkeit der Blattspitzen erzeugt wird, ist somit wesentlich höher als diejenige, die aufgrund der Translationsbewegung des Hubschraubers zustandekommt, so daß diese letztere Dopplerverschiebung im allgemeinen nicht berücksichtigt zu werden braucht. Durch die in den Rotorblattspitzen angebrachten Antennen wird durch deren schräge Blickrichtung nach unten ein Kreisring ausgeleuchtet, wobei die beleuchtete Streifenbreite vom Öffnungswinkel in Elevation, dem Depressionswinkel, d.h. dem Winkel zwischen der Blickrichtung der Antenne und der Horizontalen, und der Höhe der Antenne über Grund abhängig ist. Aus dem beleuchteten Streifen stammende Echos werden aufgrund ihrer Dopplermodulation zu höherer Azimutauflösung komprimiert, wobei für jeden Entfernungspunkt am Boden die Doppler-Zeitfunktion als zugehörige Referenzfunktion bekannt ist. Diese Referenzfunktion kann für jeden Aufpunkt am Boden deterministisch berechnet werden. Das gesamte Radarsystem stellt somit ein angepaßtes Filter dar, wobei eine fokussierte Verarbeitung vorausgesetzt wird.

Wenn mit einem solchen ROSAR-Gerät eine annehmbare Auflösung im Bereich eines Meters erreicht werden soll, müssen eine Vielzahl von Korrelationsberechnungen innerhalb kurzer Zeit erfolgen, d.h. es muß ein ungeheurer Datenfluß verarbeitet werden. Ein Prozessor, der diesen Datenfluß bearbeiten könnte, müßte eine spezielle, auf das ROSAR-Prinzip angepaßte Prozessor-Struktur aufweisen und konnte in dem angesprochenen Artikel nicht angegeben werden.

Aus der DE-A 28 35 932 ist ein ROSAR-Gerät bekannt, bei dem die Antennen in den Blattspitzen eines Hubschrauberrotors angeordnet sind. Dieses Gerät soll als Kartographier-Radargerät eingesetzt werden. Um die Prozessor-Struktur zu vereinfachen und eine herkömmliche Signalverarbeitung zu ermöglichen, werden bei diesem Konzept jedoch einige Beschränkungen vorausgesetzt: So sollen im wesentlichen nur stationäre Ziele, jedoch keine bewegten Ziele erfaßt werden. Die Korrelationsrechnungen können über mehrere Perioden der Rotordrehung zusammengefaßt werden, wodurch dieses ROSAR-Gerät jedoch nicht als Echtzeit-Radargerät zu bezeichnen ist, demnach z.B. nicht für die Navigation oder gar Zielverfolgung zu verwenden ist. Außerdem wird bei diesem bekannten Konzept die Flughöhe des Hubschraubers über Grund vernachlässigt, da diese ständig als sehr groß gegenüber der Dimension der Ziele angenommen wird. Außerdem ist auch keine Berücksichtigung der Verzerrung der ausgeleuchteten Bereiche durch die rotierenden Antennen, d.h. die Krümmung der einzelnen Auflösungszellen, vorgesehen. Diese Krümmung wird als Range-Curvature bezeichnet.

Aus der US-A 4 638 315 ist ein Radargerät mit synthetischer Apertur bekannt, bei dem der Radarsender fest, z.B. in der Hubschrauberkabine installiert ist, während die Empfangsantenne rotiert und z.B. an der Rotorblattspitze angeordnet ist. Der Radarsender beleuchtet das zu überwachende Gebiet, während die reflektierten Signale von der drehenden Antenne aufgenommen werden. Die dadurch erzeugte Dopplerverschiebung wird durch Generierung eines Pilotsignales kompensiert. Durch eine Frequenzmischung kann dann ein Entfernungssignal erhalten werden. Dieses Radargerät ist im eigentlichen Sinne kein ROSAR-Gerät, da auf die Bildung von Referenzfunktionen und eine Kreuzkorrelation verzichtet wird.

Der Erfindung liegt die Aufgabe zugrunde, eine neue Prozessor-Struktur, insbesondere für die Bildung der Referenzfunktionen anzugeben, mit der die Auflösung des ROSAR-Gerätes erhöht und Verzerrungen der errechneten Daten soweit wie möglich vermieden werden.

Diese Aufgabe ist gemäß der Erfindung durch die im kennzeichnenden Teil des Patentanspruches 1 angegebenen Merkmale gelöst.

Demgemäß wird in einem Geometriebaustein aus dem Öffnungs- und Depressionswinkel der Antenne, der Länge des rotierenden Armes und der Höhe der Antenne über Grund die Breite eines von der Antenne ausgeleuchteten Entfernungsstreifens und der Entfernungsunterschied zwischen den Strahlen von der Antenne zum vorderen bzw. hinteren ausgeleuchteten Streifenrand berechnet. In einer Schaltung wird dieser ausgeleuchtete Streifen in eine bestimmte Anzahl von Entfernungsintervallen bzw. Entfernungszellen aufgelöst. Für diese einzelnen Entfernungszellen werden dann die Referenzfunktionen berechnet. Durch eine gesteuerte Kreuzkorrelation der einlaufenden Signale mit den Referenzfunktionen der zugeordneten Entfernungszellen wird dann das eigentliche Ergebnissignal erhalten, das in bekannter Weise gespeichert und ggf. angezeigt wird.

Die Schaltung zum Unterteilen des ausgeleuchteten Streifens in eine bestimmte Anzahl von Entfernungszellen weist hierbei vorzugsweise einen Baustein zum Berechnen der Anzahl dieser Entfernungszellen innerhalb des ausgeleuchteten Streifens auf, wobei diese Berechnung aus dem berechneten Entfernungsunterschied sowie der Antennencharakteristik und der gewünschten Radialauflösung erfolgt. Aus dieser Anzahl können dann die einzelnen Entfernungsintervalle innerhalb des ausgeleuchteten Streifens berechnet werden. Ferner ist ein Baustein zum Berechnen der Integrationszeit für die einzelnen Entfernungsintervalle sowie ein Baustein zum Berechnen der Anzahl der Sendeimpulse und des Drehwinkelbereiches für die Entfernungsintervalle aufgrund der Integrationszeit vorgesehen. Mit einer solchen Schaltung ist sichergestellt, daß jeweils nur Signale aus vorher bestimmten Entfernungsintervallen miteinander kreuzkorreliert werden.

Durch eine Aufteilung der Prozessor-Struktur in einzelne Bausteine, die jeweils für spezielle Aufgaben ausgelegt sind, ist es möglich, trotz des hohen Datenflusses die einlaufenden Signale so zu verarbeiten, daß mit angemessenem Aufwand eine hohe Auflösung erzielt wird.Eine Bilderzeugung wird hier überhaupt erst möglich.

Wenn die Antennen an den Blattspitzen eines Hubschrauberrotors angeordnet sind, so ist es mit Hilfe eines Kinematiksensors, z.B. mit Hilfe von Beschleunigungsaufnehmern möglich, den Höhenschlag des Hubschrauberrotors und auch die Abweichung von der konstanten Winkelgeschwindigkeit zu bestimmen und diese Meßwerte zur Korrektur der Auswertung zu verwenden. Die durch den Höhenschlag und die variierende Winkelgeschwindigkeit notwendigen Korrekturen der jeweils errechneten Referenzfunktionen werden durch Hinzufügung einiger Korrekturterme möglich.

Ein ROSAR-Gerät gemäß der Erfindung kann z.B. für die Luftaufklärung, für die Navigation, z.B. für die Navigation von Rettungshubschraubern, für die Kartographie, zur Vermessung der Dimensionen von Meereswellen, zur Suche offener und verdeckt liegender Landminen usw. verwendet werden. Das Radargerät kann stationär oder auf Fahrzeugen angeordnet sein. Durch die angegebene Ausgestaltung der Prozessor-Struktur ist es insbesondere auch möglich, Radarsignale aus dem Nahbereich effektiv und quasi in Echtzeit zu verarbeiten, was für Navigationsverfahren unverzichtbar ist.

Weitere Ausgestaltungen der Erfindung gehen aus den Unteransprüchen hervor.

Die Erfindung ist ein einem Ausführungsbeispiel anhand der Zeichnung näher erläutert. In dieser stellen dar:

| | |
|---|---|
| Fig. 1a, und 1b | die nicht maßstabsgerechte Beleuchtungsgeometrie eines ROSAR-Gerätes, dessen Antennen an den Rotorblattspitzen eines Hubschraubers angeordnet sind; |
| Fig. 2a, und 2b | einen Ausschnitt aus der Beleuchtungsgeometrie zur Erläuterung von maßgeblichen Parametern; |
| Fig. 3 | einen Ausschnitt aus der Beleuchtungsgeometrie zur Erläuterung der Lage der Entfernungsintervalle innerhalb eines ausgeleuchteten Streifens; |
| Fig. 4 | ein Blockschaltbild eines ROSAR-Prozessors gemäß der Erfindung, bei dem zur Bildung der Referenzfunktionen ein Geometriebaustein, ein Baustein zur Berechnung der Anzahl der Entfernungsintervalle innerhalb eines ausgeleuchteten Streifens, ein Baustein zum Berechnen der Entfernungsintervalle, ein Baustein für die Bestimmung der Integrationszeit für die einzelnen Entfernungsintervalle und ein Baustein zum Berechnen von Stützstellen für die Referenzfunktion sowie Bausteine zum Erzeugen und Speichern der Referenzfunktionen für einzelne Entfernungsintervalle vorgesehen sind; |
| Fig. 5 | eine schematische Darstellung des Geometriebausteines; |
| Fig. 6 | eine schematische Darstellung des Bausteines zum Berechnen der Anzahl der Entfernungsintervalle; |
| Fig. 7 | schematisch einen Baustein zum Berechnen der einzelnen Entfernungsintervalle; |
| Fig. 8 | eine schematische Darstellung eines Bausteines zum Berechnen der Integrationszeit; |
| Fig. 9 | eine schematische Darstellung des Bausteines zum Bestimmen der Stützstellen für die Berechnung der Referenzfunktionen; |
| Fig. 10 | eine schematische Darstellung des Bausteines für die Berechnung der Referenzfunktionen; |

| Fig. 11a und 11b | je eine Prinzipdarstellung eines Speichers für die Referenzfunktionen bzw. die abgetasteten Empfangssignale; |
| Fig. 12 | eine Prinzipdarstellung des Korrelators; |
| Fig. 13 | eine schematische Darstellung eines Bausteines für die Referenzfunktionen bei unterschiedlichen Näherungsbedingungen; |
| Fig. 14 | eine schematische Ansicht der Blattspitze eines Hubschrauberrotors mit einer Antenne und einem Kinematiksensor zur Berücksichtigung des Höhenschlages des Rotors und der nichtkonstanten Rotorfrequenz; |
| Fig. 15 | eine schematische Darstellung eines Hubschraubers mit einem modifizierten ROSAR-Gerät gemäß der Erfindung; |
| Fig. 16 | ein Blockschaltdiagramm für die drahtlose Energieübertragung zwischen einem Hubschrauber und den Rotoren. |

Die in den Figuren angegebenen Formeln sind unmittelbarer Bestandteil dieser Beschreibung, auch wenn nicht ausdrücklich auf die jeweilige Figur hingewiesen wird. Dies dient zur Leseerleichterung.

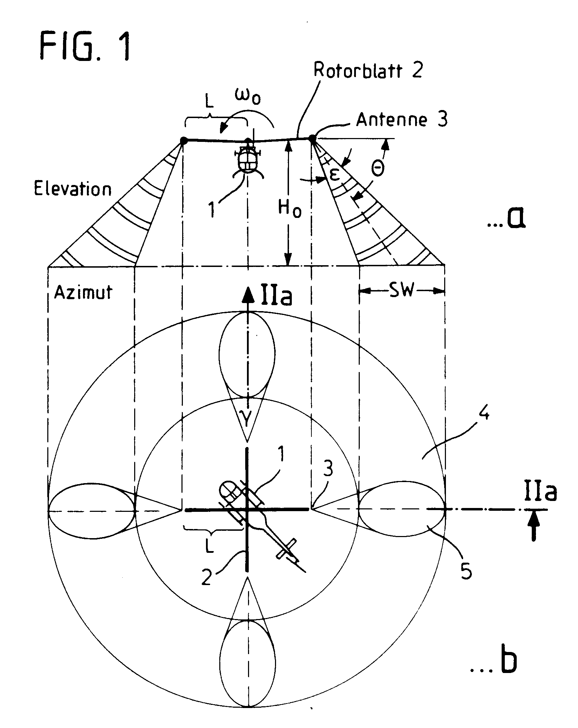

Ein Hubschrauber 1 weist einen vierblättrigen Rotor 2 auf, an dessen Blattspitzen in einer Entfernung L von der Rotorachse jeweils eine Antenne 3 angeordnet ist. Der Rotor dreht mit einer Winkelgeschwindigkeit Omega-Null. Der Öffnungswinkel der einzelnen Antennen im Azimut ist Gamma, der Öffnungswinkel der Antennen in Elevation Epsilon sowie der Depressionswinkel der Antennenblickrichtung gegenüber der Horizontalen Theta. Bei der Rotation des Rotors 2 wird somit am Boden ein Kreisring 4 mit einer Streifenbreite SW entsprechend Fig. 1b ausgeleuchtet. Die momentan von einer Antenne 3 ausgeleuchteten Bereiche innerhalb des Kreisringes 4 sind durch die hellen Ovale 5 dargestellt.

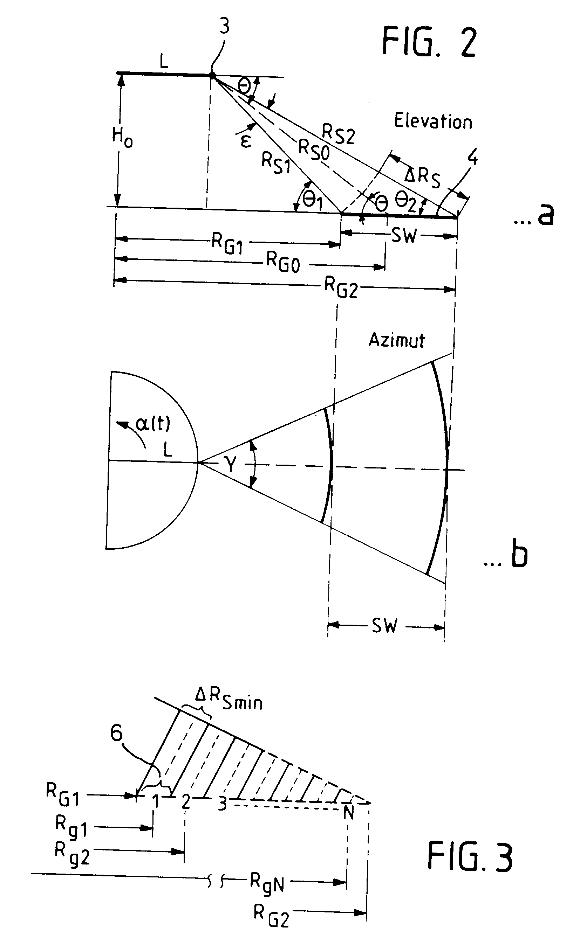

In den Figuren 2a und 2b ist diese Beleuchtungsgeometrie in Elevation bzw. Azimut detaillierter dargestellt. Der innere Rand des ausgeleuchteten Kreisringes 4 mit der Streifenbreite SW liegt am Boden in einer Entfernung $R_{G1}$ vom projizierten Hubschraubermittelpunkt, wobei dessen Entfernung zwischen der Antenne $R_{S1}$ beträgt. Mit $Theta_1$ ist der Depressionswinkel zwischen der Antenne und diesem Aufpunkt bezeichnet. Die Größen $R_{G2}$, $R_{S2}$ und $Theta_2$ gelten für den entsprechenden Aufpunkt am äußeren Rand des ausgeleuchteten Kreisringes 4. $R_{G0}$ und $R_{S0}$ gelten für den Aufpunkt am Boden im Hinblick auf die zentrale Blickrichtung der Antenne mit dem Depressionswinkel Theta. Die Differenz zwischen $R_{S2}$ und $R_{S1}$ ist in Fig. 2 mit Delta $R_S$ gekennzeichnet.

Gemäß Fig. 3 wird die Streifenbreite des Kreisringes zwischen $R_{G1}$ und $R_{G2}$ in einzelne radial gleich große Entfernungsintervalle 6 aufgeteilt, deren radiale Mittelpunkte bei den Entfernungen $R_{g1}$, $R_{g2}$ bis $R_{gN}$ liegen. Die Gesamtanzahl dieser Entfernungsintervalle 6 ist N. Diese Anzahl hängt von der minimalen Radialauflösung Delta $R_{Smin}$ ab.

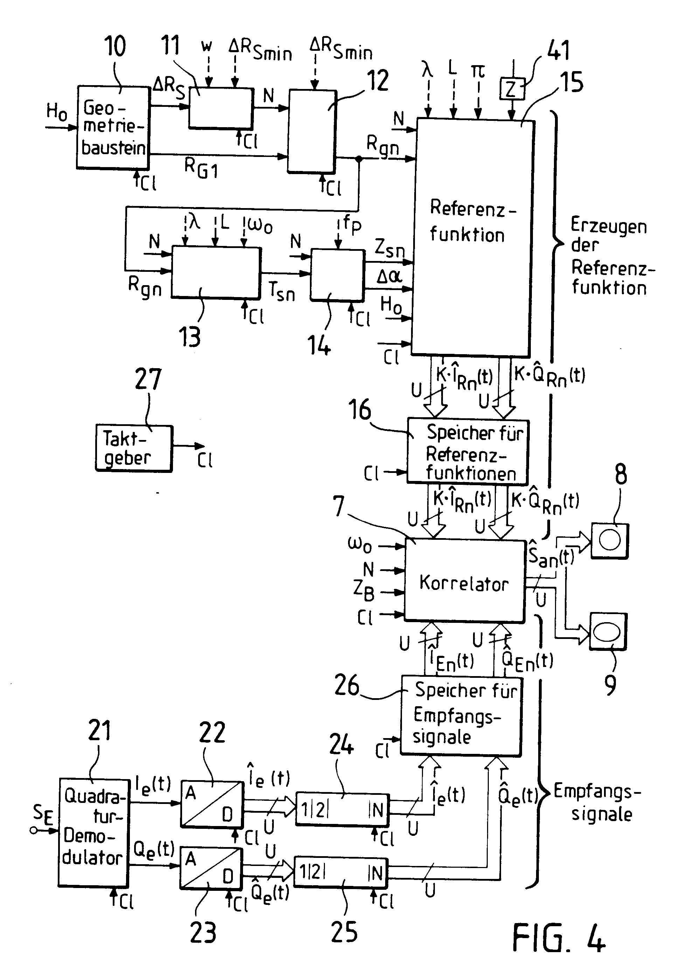

In Fig. 4 ist ein Blockschaltbild eines Prozessors für ein ROSAR-Gerät beschrieben, wobei in der oberen Hälfte des Blockschaltbildes diejenigen Bausteine dargestellt sind, die zur Erzeugung der Referenzfunktionen notwendig sind, und in der unteren Hälfte diejenigen Bausteine, die dem Empfang der am Boden reflektierten Signale dienen. Die Referenzsignale und die empfangenen Signale werden in einem Korrelator 7 korreliert und an einen Speicher 8, z.B. an ein Magnetband, ausgegeben. Eine zusätzliche Anzeige auf einem Monitor 9 ist möglich.

Für die Ermittlung der Referenzfunktionen ist ein Geometriebaustein 10 vorgesehen, ferner ein Baustein 11 für das Bestimmen der Anzahl der Entfernungsintervalle, ein Baustein 12 für die Angabe der einzelnen Entfernungsintervalle, ein Baustein 13 für die Angabe der Integrationszeit, ein Baustein 14 für die Angabe von Stützstellen für die Referenzfunktionen und schließlich ein Baustein 15 für die Ermittlung der Referenzfunktionen aus den zugeführten Daten für die einzelnen Entfernungsintervalle. Diese Referenzfunktionen werden einem Speicher 16 zugeführt, der die Referenzsignale an den Korrelator 7 liefert. Die Behandlung der Empfangssignale $S_E$ ist im wesentlichen herkömmlicher Art. Das gespeicherte Empfangssignal wird als Zwischenfrequenzsignal einem Quadraturdemodulator 21 zugeführt und durch Quadraturmischung verarbeitet und in eine Inphase-Komponente des Echosignales $I_e$ und eine Quadratur-Komponente $Q_e$ des Echosignales zerlegt. Diese Komponenten werden Analog-Digital-Wandlern 22 bzw. 23 zugeführt, an deren Ausgang dann diskrete Abtastwerte $\hat{I}_e$ bzw. $\hat{Q}_e$ der Wortlänge U anliegen. Diese komplexen Echosignale werden in Zwischenspeichern 24 bzw. 25 abgelegt, die jeweils N Speicherplätze entsprechend den oben erwähnten N Entfernungsintervallen aufweisen. Die Abtastwerte der Zwischenspeicher werden einem Speicher 26 für die Empfangssignale zugeführt, der seinerseits ausgangsseitig mit dem zweiten Eingang des Korrelators 7 verbunden ist.

Die Arbeitsweise des gesamten Prozessors wird durch einen Taktgeber 27 gesteuert, der ein Taktsignal C1 an die Bausteine zur Erzeugung der Referenzfunktion als auch an die Bausteine zur Bearbeitung der Empfangssignale sowie an den Korrelator abgibt.

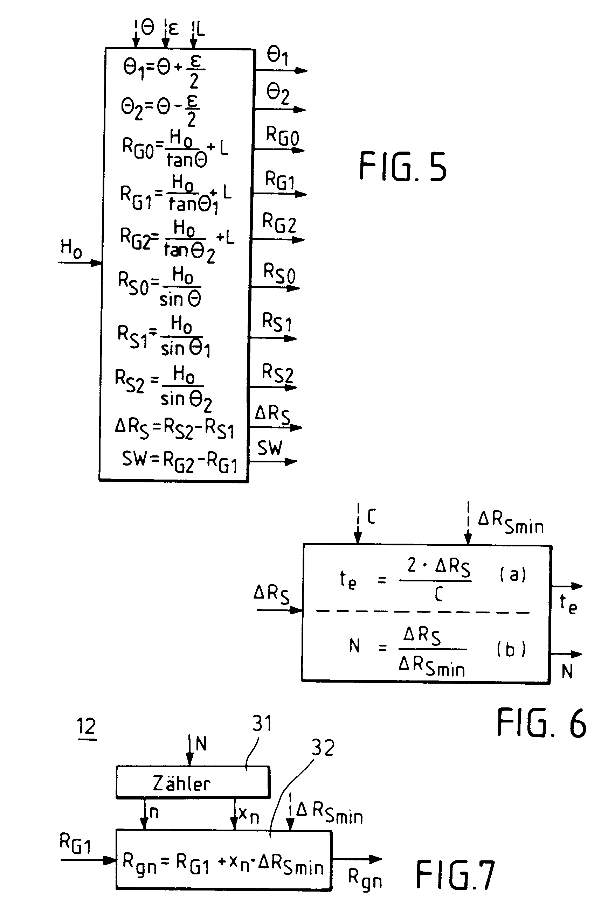

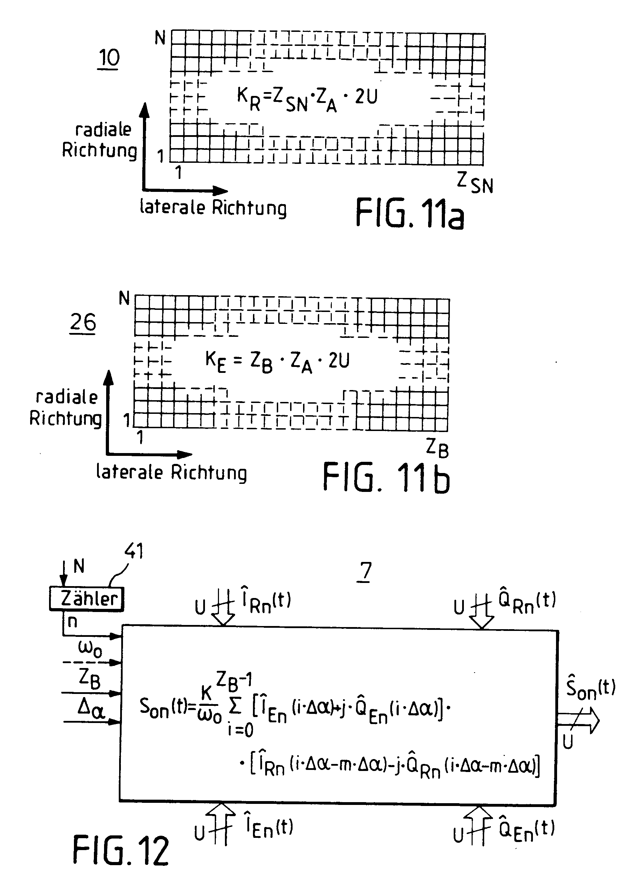

In Fig. 5 ist der Geometriebaustein 10 dargestellt, und zwar anhand der in ihm zu berechnenden Funktionsgrößen, die er aus Eingangsgrößen ermittelt und daraus entsprechende Ausgangsgrößen berechnet. Eingangsgrößen sind die Höhe über Grund $H_O$, der Depressionswinkel Theta, der Öffnungswinkel Epsilon der Antennen in Elevation und die Entfernung der Antenne vom Drehpunkt, d.h. die Länge L des Rotorblattes. Anhand der in dem Block 10 dargestellten geometrischen Beziehungen ergeben sich zwangsläufig die Ausgangsgrößen, die in den Figuren 1 und 2 dargestellt sind, nämlich $Theta_1$, $Theta_2$, $R_{G0}$, $R_{G1}$, $R_{G2}$, $R_{S0}$, $R_{S1}$, $R_{S2}$, SW und Delta $R_S$. Aus der Ausgangsgröße Delta $R_S$ werden in dem Baustein 11 anhand der angegebenen Formeln die Echodauer $t_e$ und die Anzahl N der Entfernungsintervalle innerhalb des beleuchteten Streifens errechnet. Zur Berechnung der Echodauer ist noch die Antennencharakteristik C als Eingangsgröße vorzugeben. Die Anzahl N entspricht der Anzahl der Auflösungszellen entsprechend der einzelnen Entfernungsintervalle $R_{g1}$ bis $R_{gN}$ in radialer Richtung am Boden entsprechend Fig. 3.

Der Baustein 12 berechnet aus der Eingangsgröße $R_{G1}$, die von dem Geometriebaustein 10 geliefert wird, und der Anzahl N aus dem Baustein 11 die tatsächlichen Werte für die einzelnen Entfernungsintervalle $R_{gn}$, wie in Fig. 7 dargestellt. Die Anzahl N der Entfernungsintervalle wird einem Zähler 31 zugeführt, der aus dem Eingangswert n bis N jeweils einen Ausgangswert $x_n$ berechnet, der um den Wert 1/2 gegenüber dem Eingangswert vermindert ist. Die Ausgangssignale des Zählers 31 werden gemeinsam mit dem Signal Delta $R_{Smin}$ für die Radialauflösung und dem Signal $R_{G1}$ einem Funktionsblock 32 zugeführt, in dem entsprechend der angegebenen Formel die Werte $R_{gn}$ für die einzelnen Entfernungsintervalle berechnet werden.

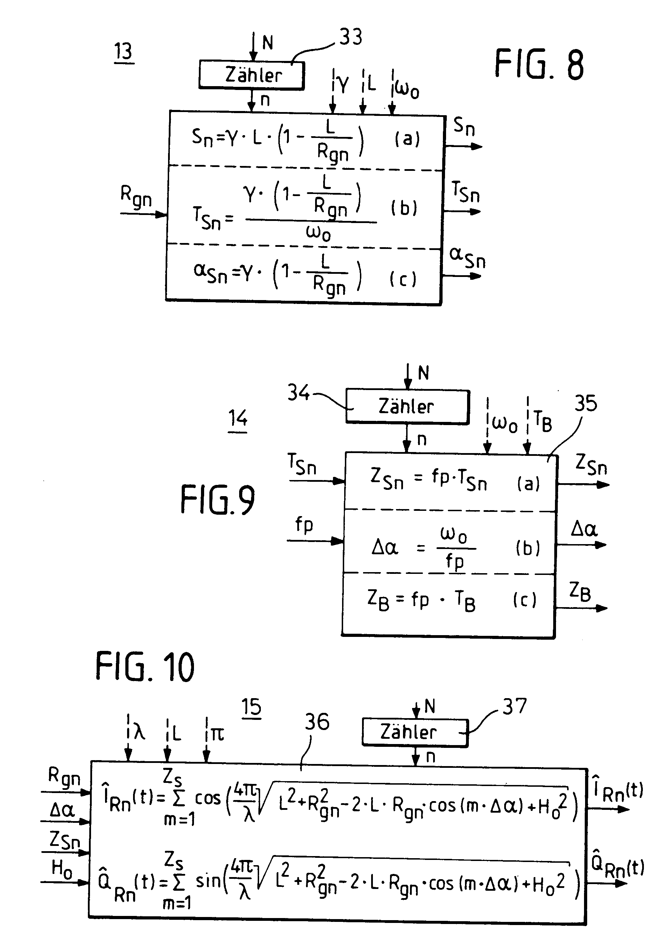

Diese Werte werden dem Baustein 13 zugeführt. Dieser Baustein erhält ferner über einen Zähler 33 jeweils die zugeordnete Zahl n der insgesamt N Entfernungsintervalle und berechnet aus diesen Werten und dem Öffnungswinkel Gamma der Antenne in Azimut, der Länge L des Rotorblattes und der Winkelgeschwindigkeit Omega-Null des Rotorblattes gemäß den in Fig. 8 angegebenen Formeln die synthetische Apertur S, die Integrationszeit $T_S$ und den Drehwinkelbereich Alpha $_S$ der Integration, jeweils für eines der Entfernungsintervalle, was durch den Index n angegeben ist. Dieser Index läuft von 1 bis N.

In dem Baustein 14 werden aufgrund der Integrationszeit $T_{Sn}$ für jedes Entfernungsintervall und der Pulswiederholfrequenz $f_p$ des Radargerätes die Anzahl $Z_{Sn}$ der Stützstellen für die Referenzfunktion während der Integration, die Schrittweite Delta Alpha der Stützwerte für die Dopplerabtastung und die Referenzfunktion sowie die Gesamtanzahl $Z_B$ der Stützstellen für eine volle Umdrehung einer Antenne berechnet. Weitere Eingangsgrößen sind wiederum die Gesamtanzahl N der Entfernungsintervalle, die getaktet einem Zähler 34 zugeführt werden, der die Berechnung der Ausgangsgrößen für jedes Entfernungsintervall n gewährleistet. Weitere Eingangsgrößen sind wiederum die Winkelgeschwindigkeit Omega-Null des Rotors und die Abbildungsdauer $T_B$. Diese Abbildungsdauer ist die gesamte Zeitdauer, während der eine Beleuchtung der Umgebung erfolgt. Ihr Maximalwert ist für einen Umlauf des Rotors durch den Umfang der Rotorblattebene und die Umlaufgeschwindigkeit festgelegt.

Die Anzahl der Stützstellen, die von der Pulswiederholfrequenz und der Integrationszeit abhängt, bestimmt die Kapazität des Speichers 16 für die Referenzfunktionen. Der Speicher wird für die maximal vorkommende Anzahl von Stützstellen ausgelegt, d.h. für eine Anzahl, die längs des äußeren Streifenrandes des beleuchteten Kreisringes vorhanden ist. Dieser Anzahl der Stützstellen ist direkt die Schrittweite Delta Alpha der Stützwerte entsprechend einem jeweiligen Winkelbereich für die Integration zugeordnet.

Aus den Werten $R_{gn}$, Delta Alpha, $Z_{Sn}$ und der Antennenhöhe $H_0$ über Grund können dann die Referenzfunktionen $S_R$ in dem Baustein 15 gemäß Fig. 10 anhand der dort angegebenen Formeln berechnet werden. Für diese Rechnung werden die Wellenlänge lambda, die Rotorblattlänge L und die Kreiszahl vorgegeben. Die Berechnung erfolgt in einem Funktionsblock 36, dem über einen Zähler 37 noch die Nummer n des jeweiligen Entfernungsintervalles zugeführt wird.

Die Referenzfunktion $S_R$ ist aus einem Realteil $I_R$ und einem Imaginärteil $Q_R$ zusammengesetzt. Dies gilt für jedes Entfernungsintervall 1 bis N, was durch den weiteren Index n ausgedrückt ist. Die Formeln, die dieser Berechnung zugrundeliegen, sind in dem Funktionsblock 36 entsprechend Fig. 10 als mit einem Dach gekennzeichnete Abtastwerte angegeben. Die Berechnung der Referenzfunktionen erfolgt für alle Entfernungsintervalle, so daß die Abtastwerte jeweils über die Zahl $Z_S$ der Sendeimpulse aufsummiert werden.

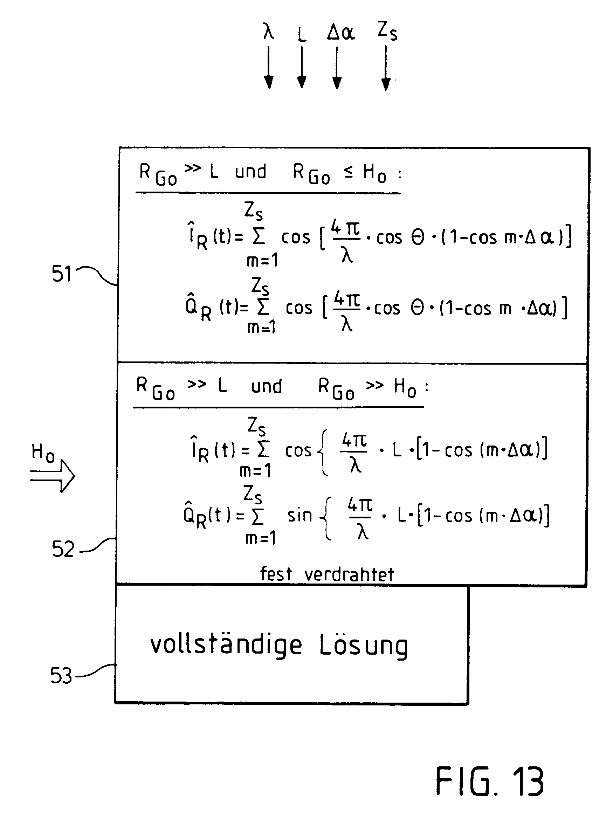

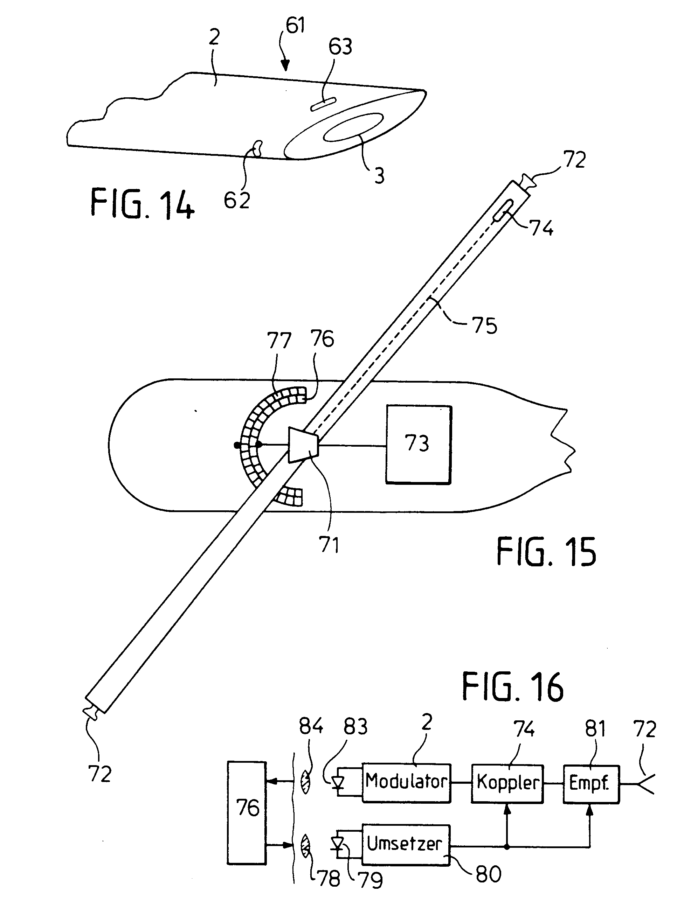

Die für alle Entfernungsintervalle ermittelten Referenzfunktionen werden dem Speicher 16 zugeführt, dessen Aufbau schematisch in Fig. 11a dargestellt ist. Dieser Speicher ist in Zeilen und Spalten aufgeteilt, wobei in jeder Zeile eine Referenzfunktion für ein Entfernungsintervall gespeichert ist. Die Anzahl der Zeilen wird durch die Anzahl N der Entfernungsintervalle bestimmt, die Anzahl der Spalten durch die Anzahl $Z_{SN}$ der Stützstellen über die berücksichtigte Aperturlänge. Die Anzahl der Stützstellen wird durch den gewünschten Gesamtblickwinkel des Radargerätes bestimmt, der z.B. 180° ist, wenn nur eine Detektion von Zielen in Vorwärtsrichtung, bezogen auf die Flugrichtung des Hubschraubers, gewünscht ist. Die Kapazität $K_R$ ist bestimmt durch das Produkt aus der Gesamtanzahl $Z_{SN}$ der Stützstellen, durch die Anzahl $Z_A$ der Abtastwerte in radialer Richtung und den doppelten Wert der Wortlänge U der digital gewandelten Signale, da diese als komplexe Werte vorliegen.

In ähnlicher Weise werden die Abtastwerte der empfangenen Signale in dem Speicher 26 gemäß Fig. 11b aufgenommen. Die Speicherkapazität $K_E$ dieses Speichers 26 ist bestimmt durch das Produkt aus der Zahl $Z_B$ der Sendeimpulse in lateraler Richtung, der Anzahl $Z_A$ der Abtastwerte in radialer Richtung und wiederum der doppelten Wortlänge U der digital gewandelten Empfangssignale.

In dem Korrelator 7 werden getaktet für jedes betrachtete Entfernungsintervall die von dem Speicher 26 gelieferten Real- und Imaginärwerte der Empfangssignale mit den entsprechenden Werten der Referenzfunktionen verglichen und komlex kreuzkorreliert. Im Korrelator 7 wird über einen Zähler 41 die jeweilige Nummer des betrachteten Entfernungsintervalles als Vorgabe zugeführt, außerdem werden als Vorgabewerte die Winkelgeschwindigkeit Omega-Null des Rotorblattes, die Anzahl $Z_B$ der Sendeimpulse in lateraler Richtung entsprechend der Anzahl der Stützwerte und die jeweilige Schrittweite Delta Alpha der Stützwerte für die Dopplerabtastung und die Referenzfunktion zugeführt. Die Korrelationsergebnisse für die einzelnen Abtastungen werden als Ergebnissignale $\hat{S}_{on}(t)$ an den Speicher 8 bzw. den Monitor 9 abgegeben.

Mit der angegebenen Prozessorstruktur wird die Korrelation in Echtzeit für alle Werte der Eingangsparameter berechnet. Im Falle, daß die Länge L des Rotorblattes sehr klein gegenüber der Entfernung $R_{G1}$ am Boden zwischen dem Antennendrehpunkt und dem inneren Rand des ausgeleuchteten Streifens ist, können die Funktionsberechnungen innerhalb des Geometriebausteines 10 vereinfacht werden. Daraus resultiert dann auch eine einfachere Berechnung der Referenzfunktion, die umittelbar aus den angegebenen Formeln hervorgeht. Hieraus kann für die Berechnung der Referenzfunktion und der Korrelation eine erste Näherung durch eine einfachere Schaltung erfolgen, die in Fig. 13 durch den Block 51 dargestellt ist. Wird zudem noch $R_{G0}$ sehr groß gegenüber L und gleichzeitig gegenüber der Höhe $H_0$ der Antenne über Grund, so können die angegebenen Formeln weiter vereinfacht werden. Die Schaltungen für die Erzeugung der Referenzfunktion können in diesem Falle fest verdrahtet werden und sind in Fig. 13 durch den Funktionsblock 52 dargestellt. Nur für die übrigen Fälle, d.h. im wesentlichen für die Detektion von Zielen im Nahbereich, muß die oben angegebene vollständige Lösung verwendet werden. Bei der Verwendung des ROSAR-Gerätes an einem Hubschrauber, z.B. zur Navigationsunterstützung, kann damit der größte Teil aller Navigationsaufgaben mit den Näherungslösungen, d.h. im wesentlichen mit fest verdrahteten Schaltungen erfüllt werden.

Wie aus den Formeln für die Referenzfunktionen hervorgeht, ist diese von der Winkelgeschwindigkeit des Rotorblattes und auch der Höhe über Grund abhängig. Die Freiheitsgerade der Rotorblattsitze bei der Kreisbewegung sind radiale Abweichungen von der Kreisbahn, Höhenabweichungen und Verdrehungen um die Rotorachse. Hinzu kommt noch ggfs. eine nichtkonstante Winkelgeschwindigkeit. Die Achsverdrehung und die Radialabweichung können im wesentlichen vernachlässigt werden, sofern das Rotorblatt gut ausgewuchtet ist. Hiermit verbleibt für die Korrektur der Referenzfunktionen im wesentlichen nur der Höhenschlag des Rotorblattes und die Abweichung von der konstanten Winkelgeschwindigkeit. Um diese beiden Größen zu erfassen, ist an den Blattspitzen jeweils ein Kinematiksensor 61 aus zwei Beschleunigungssensoren 62 und 63 angeordnet, wobei mit dem Beschleunigungssensor 62 der Höhenschlag und mit dem Beschleunigungssensor 63 Abweichungen von der konstanten Winkelgelschwindigkeit bestimmt werden. Die zeitlichen Schwankungen der Höhe der Antenne über Grund kann durch eine doppelte Integration der mit dem Beschleunigungssensor 62 erfaßten Signale ermittelt werden, wohingegen die Abweichungen der Kreisfrequenz durch eine einfache Integration der Signale des Beschleunigungssensors 63 dividiert durch die Rotorblattlänge erfaßt werden. Diese zeitabhängigen Korrekturen werden in der Gleichung für die Referenzfunktion anstelle der dort vorhandenen konstanten Größen $H_0$ und Omega-Null eingesetzt.

In der obigen Beschreibung wurde angenommen, daß sowohl die Senderantennen als auch die Empfangsantennen an den Blattspitzen des Rotors angeordnet sind. Es ist zwar durchaus möglich, die für die Betätigung der Senderantennen notwendige Energie von der Hubschrauberzelle zu den Antennen über eine Drehkopplung zu übertragen. Es ist jedoch auch möglich, wie in Fig. 15 gezeigt, die Senderantenne 71 fest, z.B. auf dem Rotormasten des Hubschraubers zu montieren und nur die Empfangsantenne 72 in die Blattspitze des Rotors 2 zu integrieren. Nachdem jetzt die Dopplerinformation nur über die drehenden Empfangsantennen und nicht noch zusätzlich über die Senderantenne erzeugt wird, können die oben angegebenen Formeln bei sonst gleichen Parametern hinsichtlich der Dopplerinformation durch den Faktor 2 dividiert werden.

Die Energieübertragung zwischen der Empfangsantenne 72 und der Auswerteschaltung 73 des ROSAR-Gerätes erfolgt drahtlos, und vorzugsweise opto-elektronisch. Hierzu ist die Empfangsantenne mit einem opto-elektronischen Koppler 74 verbunden, der die elektrischen Signale der Antenne in optische Signale umwandelt, die über Lichtleitfasern 75 innerhalb des Rotorblattes übertragen und im Bereich der Drehachse des Rotorblattes mit einer Photodetektoranordnung 76 zusammenarbeiten. Der Photodetektoranordnung 76 ist eine Anordnung 77 aus opto-elektronischen Kopplern zugeordnet, die die Lichtsignale in elektrische Signale umwandeln und diese der Auswerteschaltung 73 zuführen. Auch die Energieübertragung zwischen Rumpf und Antenne, z.B. zur Versorgung des elektrooptischen Kopplers 74 erfolgt drahtlos, z.B. mit Hilfe einer hier nicht dargestellten Ringschlitzleitung bzw. einer Laseranordnung. Im letzten Falle enthält die Anordnung 76 auch aktive Laser-Senderdioden, deren Licht in die Lichtleitfasern 75 eingekoppelt und im Bereich der Blattspitze in elektrische Energie für den opto-elektronischen Koppler 74 rückgewandelt werden. Dies ist schematisch in Fig. 16 dargestellt. Die von den Laserdioden der Anordnung 76 ausgesendete Laserstrahlung wird über eine Linsenanordnung 78 im Bereich der Drehachse des Rotors in das Blatt übertragen, dort mit Hilfe einer Laserdiode 79 empfangen und in einem opto-elektronischen Umsetzer 80 in elektrische Energie zurückgewandelt, die einem Empfänger 81 der Sendeantenne 72 und dem opto-elektronischen Koppler 74 zugeführt wird. Die Empfangssignale der Antenne 72 werden dem Empfänger 81 zugeführt, dann opto-elektronisch im Koppler 74 gewandelt und in einem Modulator 82 moduliert. Diese modulierten Signale werden mit einer Diode 83 abgestrahlt, über eine Linsenanordnung 84 gebündelt und auf die Empfangsdioden der Photodetektoranordnung 76 geleitet.

Die an dem Hubschrauberrumpf angeordnete Senderantenne und die Empfangsantenne sollen im wesentlichen die gleichen Antennendiagramme aufweisen und z.B. einen horizontalen Öffnungswinkel von 180° haben. Durch diese Charakteristik der Senderantenne ist nur der vor dem Hubschrauber liegende Bereich abbildbar. Während der Abbildungsdauer werden die Signale des Kinematiksensors 61 zur Auswerteeinheit 73 geleitet und zur Korrektur der Referenzfunktionen benutzt. Ebenso wird das Empfangssignal auf eine Zwischenfrequenz kohärent zur ausgestrahlten Sendefrequenz umgesetzt und mit Hilfe des Lichtmodulators und der Laser-Sendediode über die Laser-Übertragungsstrecke auf die Photodetektoreinheit 76 übertragen. Somit können der Auswerteeinheit 73 sowohl das von der Empfangsantenne 72 empfangene Gesamtsignal als auch die Korrektursignale für die Referenzfunktionen für einen halben Umlauf des Rotorblattes eingespeist werden.

## Patentansprüche

1. Radargerät mit zumindest einem Sender und einem Empfänger, deren zumindest eine Antenne zum Senden und Empfangen von Radarimpulsen am Ende eines rotierenden Armes angeordnet ist, mit einer Einrichtung zum Demodulieren und Zwischenspeichern der Empfangssignale, mit Einrichtungen zum Bilden und Speichern von Referenzfunktionen in Abhängigkeit der Beleuchtungsgeometrie des Radargerätes der zu vermessenden Entfernungsintervalle, der Drehwinkelbereiche, der Sendeimpulse sowie der Höhe der rotierenden Antenne über Grund, und mit einem Korrelator zum Korrelieren der Empfangssignale mit den Referenzfunktionen sowie einem Anzeigegerät für das Korrelationsergebnis, **dadurch gekennzeichnet**, daß die Einrichtungen zum Bilden der Referenzfunktionen folgende Bausteine aufweisen:

   a) einen Geometriebaustein (10), in dem aus Öffnungs- und Depressionswinkel (Epsilon, Theta) der Antenne (3), der Länge (L) des rotierenden Armes und der Höhe ($H_0$) der Antenne (3) über Grund die Breite (SW) eines von der Antenne ausgeleuchteten Entfernungsstreifens (4; $R_{G2}$ - $R_{G1}$) und der Entfernungsunterschied (Delta $R_S$) zwischen den Strahlen ($R_{S2}$, $R_{S1}$) von der Antenne (3) zum inneren bzw. äußeren ausgeleuchteten Streifenrand berechnet wird;

   b) eine Schaltung (11 bis 15) zum Unterteilen des ausgeleuchteten Streifens (4) in eine bestimmte Anzahl (N) von Entfernungsintervallen (6; $R_{g1}$ bis $R_{gN}$) sowie

   c) einen Baustein (15) zum Bilden der Referenzfunktionen (SR) für die einzelnen Entfernungsintervalle (6; $R_{G1}$ bis $R_{GN}$).

2. Radargerät nach Anspruch 1, **dadurch gekennzeichnet**, daß die Schaltung (11 - 14) zum Unterteilen des ausgeleuchteten Streifens (4) folgende Bausteine enthält:

   a) einen Baustein (11) zum Berechnen der Anzahl (N) der Entfernungsintervalle (6; $R_{gn}$) innerhalb des ausgeleuchteten Streifens (4 ) durch Division des berechneten Entfernungsunterschiedes (Delta $R_S$) zwischen den Strahlen ($R_{S1}$, $R_{S2}$) von der Antenne (3) zum inneren bzw. äußeren Streifenrand und der gewünschten Radialauflösung (Delta $R_{Smin}$),

   b) einen Baustein (12) zum Berechnen der Entfernungen zur Intervallmitte ($R_{gn}$) innerhalb des ausgeleuchteten Streifens (4) aufgrund der Anzahl (N) der Entfernungsintervalle;

   c) einen Baustein (13) zum Berechnen der Integrationszeit ($T_{Sn}$) für die einzelnen Entfernungsintervalle und

   d) einen Baustein (14) zum Berechnen der Anzahl ($Z_{Sn}$) der Sendeimpulse entsprechend der Anzahl von Stützstellen für die Referenzfunktionen ($S_R$) und des Drehwinkelbereiches (Delta Alpha) für die Entfernungen zur Intervallmitte ($R_{gn}$) aufgrund der Integrationszeit.

3. Radargerät nach Anspruch 2, **dadurch gekennzeichnet**, daß der Baustein (11) zum Berechnen der Anzahl (N) der Entfernungsintervalle (6, $R_{gn}$) zusätzlich die Echodauer ($t_e$) zu 2 Delta $R_S$/C berechnet, wobei C die Lichtgeschwindigkeit ist.

4. Radargerät nach Anspruch 2, **dadurch gekennzeichnet**, daß der Baustein (12) zum Berechnen der Entfernungen zur Intervallmitte ($R_{gn}$) einen Zähler (31), dem die jeweilige Nummer (N) der Entfernungsintervalle zugeführt wird, und einen Funktionsblock 32 aufweist, der aus den Ausgangssignalen (N bis $x_n$) des Zählers 31, der Entfernung ($R_{G1}$) am Boden bis zu dem inneren Rand des ausgeleuchteten Streifens (4) und der gewünschten Radialauflösung (Delta $R_{Smin}$) die Entfernungen ($R_{gn}$) zum jeweiligen Intervallmittelpunkt berechnet zu:

$$R_{gn} = R_{G1} + X_n \cdot \text{Delta } R_{Smin}.$$

5. Radargerät nach Anspruch 2, **dadurch gekennzeichnet**, daß der Baustein (13) zum Berechnen der Integrationszeit ($T_{Sn}$) einen Zähler (33) aufweist, dem die Anzahl (N) der Entfernungsintervalle zugeführt werden, und der die Nummer (n) des jeweiligen Entfernungsintervalles ($R_{gn}$) abgibt, und daß der Baustein (13) aus dieser Nummer (n) und dem jeweiligen Entfernungsintervall ($R_{gn}$) unter Zuhilfenahme des Öffnungswinkels (gamma) der Antenne der Länge (L) des Trägerarmes (2) und der Winkelgeschwindigkeit (Omega-Null) der Antenne (3) neben der Integrationszeit ($T_{Sn}$) die synthetische Apertur (Sn) und den Drehwinkelbereich (Alpha $_{Sn}$) der Antenne für jedes Entfernungsintervall ($R_{gn}$) berechnet zu:

$$S_n = \text{Gamma} \cdot L \cdot (1 - L/R_{gn}) \quad \text{(a)}$$

$$T_{Sn} = \frac{\text{Gamma} \cdot (1 - L/R_{gn})}{\text{Omega} - \text{Null}} \quad \text{(b)}$$

$$\text{Alpha }_{Sn} = \text{Gamma} \cdot (1 - L/R_{gn}) \quad \text{(c)}$$

6. Radargerät nach Anspruch 2, **dadurch gekennzeichnet**, daß der Baustein (14) zum Berechnen der Anzahl ($Z_{Sn}$) der Sendeimpulse und des Drehwinkelbereiches (Delta Alpha) einen Zähler (34) aufweist, dem die Anzahl (N) der Entfernungsbereiche ($R_{gn}$) zugeführt werden und der die Nummer (n) des jeweiligen Entfernungsintervalles ($R_{gn}$) abgibt, und daß der Baustein (14) aus dieser Nummer, der Integrationszeit ($T_{Sn}$) und der Pulswiederholfrequenz ($f_p$) unter Zuhilfenahme der Winkelgeschwindigkeit (Omega-Null) der Antenne (3) die Anzahl der Stützstellen ($Z_{Sn}$) und die Winkelschrittweite (Delta Alpha) berechnet zu:

$$Z_{Sn} = fp \cdot T_{Sn} \quad \text{(a)}$$

$$\text{Delta Alpha} = \text{Omega} - \text{Null}/fp \quad \text{(b)}$$

7. Radargerät nach einem der vorhergehenden Ansprüche, **dadurch gekennzeichnet**, daß der Baustein (15) zum Bestimmen der Referenzfunktionen ($S_R$) einen Zähler (37) aufweist, dem die Anzahl (N) der Entfernungsintervalle ($R_{gn}$) zugeführt wird und der die Nummer (n) des jeweiligen Entfernungsintervalles ($R_{gn}$) abgibt, und daß der Baustein (15) aus dieser Nummer (n), dem jeweiligen Entfernungsintervall ($R_{gn}$), der Winkelschrittweite (Delta Alpha), der jeweiligen Stützstelle ($Z_{Sn}$) und der Höhe ($H_0$) der Antenne (3) über Grund unter Zuhilfenahme der Wellenlänge (Lambda) und der Länge (L) des Trägerarmes (2) den Realteil ($I_{Rn}$) und den Imaginärteil ($Q_{Rn}$) der Referenzfunktionen ($S_R$) berechnet zu:

$$\hat{I}_{Rn}(t) = \sum_{m=1}^{Z_S} \cos(4\,Pi/Lambda)\sqrt{L^2 + R^2_{gn} - 2 \cdot L \cdot R_{gn} \cdot \cos(m \cdot \text{Delta Alpha}) + H_0^2}$$

$$\hat{Q}_{Rn}(t) = \sum_{m=1}^{Z_S} \sin(4\,P/Lambda)\sqrt{L^2 + R^2_{gn} - 2 \cdot L \cdot R_{gn} \cdot \cos(m \cdot \text{Delta Alpha}) + H_0^2}.$$

8. Radargerät nach einem der vorhergehenden Ansprüche, **dadurch gekennzeichnet**, daß der Trägerarm (2) für die Antenne (3) in deren Bereich einen Kinematiksensor (61) zum Bestimmen der Höhenschwankungen des Trägerarmes (2) im Bereich der Antenne (3) und der Schwankungen der Winkelgeschwindigkeit des Trägerarmes aufweist, und daß aus den gemessenen Beschleunigungen in den Referenzfunktionen die dort als Konstanten angenommene Höhe ($H_0$) und Winkelgeschwindigkeit (Omega-Null) als Variable eingeführt werden.

9. Radargerät nach Anspruch 8, **dadurch gekennzeichnet**, daß der Kinematiksensor (61) zwei in zueinander senkrechten Richtungen empfindliche Beschleunigungssensoren (62,63) aufweist, wobei der erste Beschleunigungssensor (62) in einer für den Höhenschlag des Tragarmes (2) bestimmenden Richtung ausgerichtet und der andere Beschleunigungssensor (63) in der Umlaufebene des Tragarmes (2) ausgerichtet ist.

10. Radargerät nach einem der vorhergehenden Ansprüche, **dadurch gekennzeichnet, daß** lediglich die Empfangsantennen (72) an dem rotierenden Tragarm (2) angeordnet sind, und daß die Senderantenne (71) fest in bezug zu der Drehachse des Tragarmes (2) auf dem Rotormast angeordnet ist.

11. Radargerät nach einem der vorhergehenden Ansprüche, **dadurch gekennzeichnet,** daß die Energieübertragung zu den rotierenden Antennen (3,72) und die Signalübertragung von den rotierenden Antennen (3,72) über die Drehachse des Tragarmes (2) berührungslos erfolgt.

12. Radargerät nach Anspruch 11, **dadurch gekennzeichnet**, daß die Energieübertragung zu den rotierenden Antennen (3, 72) und die Signalübertragung von diesen Antennen (3,72) mit Hilfe einer optoelektronischen Koppleranordnung (74,76,77) erfolgt.

## Claims

1. A radar unit comprising at least one transmitter and one receiver, the at least one antenna of which for transmitting and receiving radar pulses is arranged at the end of a rotary arm, a device for demodulation and intermediate storage of received signals, devices for forming and storing reference functions in dependence on the illumination geometry of the radar unit of measured range intervals, rotary angle ranges, transmit pulses as well as the height above ground of the rotating antenna, as well as with a correlator for correlating the received signals with the reference functions and an indicating device for the correlation result, **characterised in that** the devices for forming the reference functions comprise the following modules:

   a) a geometry module (10) which calculates from the aperture and depression angle (Epsilon, Theta) of the antenna (3), the length (L) of the rotating arm and the height ($H_o$) above ground of the antenna (3) the width (SW) of a range strip (4; $R_{G2} - R_{G1}$) illuminated by the antenna and the range difference (Delta $R_S$) between the beams ($R_{S2}$, $R_{S1}$) from the antenna (3) to the inner or outer illuminated strip edge;

   b) a circuit (11 to 15) for division of the illuminated strip (4) into a specified number (N) of range intervals (6; $R_{g1}$ to $R_{gN}$); as well as

   c) a module (15) for forming the reference function (SR) for the individual range intervals (6; $R_{G1}$ to $Rx_{GN}$).

2. A radar unit according to claim 1, **characterised in that** the circuit (11 - 14) for division of the illuminated strip (4) comprises the following modules:

   a) a module (11) for calculating the number (N) of range intervals (6; $R_{gn}$) within the illuminated strip (4) by division of the calculated range difference (Delta $R_s$) between the beams ($R_{S1}$, $R_{S2}$) from the antenna (3) to the inner or outer strip edge and the desired radial resolution (Delta $R_{Smin}$);

   b) a module (12) for calculating the ranges to the interval centre ($R_{gn}$) within the illuminated strip (4) based on the number (N) of range intervals;

   c) a module (13) for calculating the integration time ($T_{Sn}$) for the individual range intervals; and

   d) a module (14) for calculating the number ($Z_{Sn}$) of the transmit pulses relative to the number of support points for the reference functions ($S_R$) and the rotary angle range (Delta Alpha) for distances to the interval centre ($R_{gn}$) due to the integration time.

3. A radar unit according to claim 2, **characterised in that** the module (11) for calculating the number (N) of range intervals (6, $R_{gn}$) additionally calculates the echo duration ($t_e$) to 2 Delta $R_s$/C, where C is the speed of light.

4. A radar unit according to claim 2, **characterised in that** the module (12) for calculating the ranges to the interval centre ($R_{gn}$) comprises a counter (31) which is fed the range intervals, and a function block 32 which calculates from the output signals (N to $x_n$) of the counter 31, the range ($R_{G1}$) on the ground up to the inner edge of the illuminated strip (4) and the desired radial resolution (Delta $R_{Smin}$) the ranges ($R_{gn}$) to a respective interval centre as

$$R_{gn} = R_{G1} + X_n \times \text{Delta } R_{Smin.}$$

5. A radar unit according to claim 2, **characterised in that** the module (13) for calculating the integration time ($T_{Sn}$) comprises a counter (33) which is fed the number (N) of range intervals and which outputs the number (n) of a respective range interval ($R_{gn}$), and that the module (13) calculates from this number (n) and a respective range interval ($R_{gn}$), with the aid of the aperture angle (gamma) of the antenna, the length (L) of the support arm (2) and the angle speed (Omega-Null) of the antenna (3), both the integration time ($T_{Sn}$), the synthetic aperture (Sn) and the rotary angle range (Alpha $_{Sn}$) of the antenna for each range interval ($R_{gn}$) as

$$S_n = \text{Gamma} \times L \times (1 - L/R_{gn}) \quad \text{(a)}$$

$$T_{Sn} = \frac{\text{Gamma} \times (1 - L/R_{gn})}{\text{Omega} - \text{Null}} \quad \text{(b)}$$

$$\text{Alpha }_{Sn} = \text{Gamma} \times (1 - L/R_{gn}) \quad \text{(c)}$$

6. A radar unit according to claim 2, **characterised in that** the module (14) for calculating the number ($Z_{Sn}$) of transmit pulses and the rotary angle range (Delta Alpha) comprises a counter (34) which is fed the number (N) of ranges ($R_{gn}$) and which outputs the number (n) of respective range intervals ($R_{gn}$), and that the module (14) calculates from this number, the integration time ($T_{Sn}$) and the pulse-repeat frequency (fp), with the aid of the angular speed (Omega-Null) of the antenna (3), the number of support points ($Z_{Sn}$) and the angular step width (Delta Alpha) as

$$Z_{Sn} = fp \times T_{Sn} \quad \text{(a)}$$

$$\text{Delta Alpha} = \text{Omega} - \text{Null}/fp \quad \text{(b)}$$

7. A radar unit according to one of the above claims, **characterised in that** the module (15) for determining the reference functions (SR) comprises a counter (37) which is fed the number (N) of range intervals ($R_{gn}$) and which outputs the number (n) of a respective range interval ($R_{gn}$), and that the module (15) calculates from this number (n), a respective range interval ($R_{gn}$), the angle step width (Delta Alpha), a respective support point ($Z_{Sn}$) and the height (Ho) of the antenna (3) above ground, with the aid of the wavelength (Lambda) and the length (L) of the support arm (2), the real portion ($1_{Rn}$) and the imaginary portion ($Q_{Rn}$) of the reference functions ($S_R$) as

$$\hat{I}_{Rn}(t) = \sum_{m=1}^{Z_s} \cos(4\,Pi/\text{Lambda}) \sqrt{L^2 + R^2_{gn} - 2 \times L \times R_{gn} \times \cos(m \times \text{Delta Alpha}) + Ho^2}$$

$$\hat{Q}_{Rn}(t) = \sum_{m=1}^{Z_s} \sin(4\,P/\text{Lambda}) \sqrt{L^2 + R^2_{gn} - 2 \times L \times R_{gn} \times \cos(m \times \text{Delta Alpha}) + Ho^2}$$

8. A radar unit according to one of the above claims, **characterised in that** the support arm (2) for the antenna (3) has in the area of the latter a kinematic sensor (61) for determining altitude fluctuations of the support arm (2) in the region of the antenna (3) and fluctuations in angle speed of the support arm, and that from the measured accelerations in the reference functions is introduced a thereat assumed constant altitude ($H_0$) and angle speed (Omega-Null) as a variable.

9. A radar unit according to claim 8, **characterised in that** the kinematic sensor (61) comprises two acceleration sensors (62, 63), which are sensitive in two vertical directions to each other, and that the first acceleration sensor (62) is oriented in a direction which determines the altitudinal flap of the support arm (2), and the other acceleration sensor (63) in the peripheral plane of the support arm (2).

10. A radar unit according to one of the above claims, **characterised in that** only the receive antennae (72) are arranged on the rotary support arm (2), and that the transmit antenna (71) is fixed relative to the rotary axis of the support arm (2) on the rotor mast.

11. A radar unit according to one of the above claims, **characterised in that** the energy transfer to the rotating antennae (3, 72) and the signal transfer from the rotating antennae (3, 72) is carried out contact-free via the rotary axis of the support arm (2).

12. A radar unit according to claim 11, **characterised in that** the energy transfer to the rotating antennae (3, 72) and the signal transfer from these antennae (3, 72) is carried out with the aid of an opto-electronic coupling arrangement (74, 76, 77).

**Revendications**

1. Appareil radar comportant au moins un émetteur et un récepteur, dont l'antenne au nombre d'au moins une destinée à l'émission et à la réception d'impulsions radar est disposée à l'extrémité d'un bras tournant, comportant un dispositif pour la démodulation et le stockage intermédiaire des signaux reçus, des dispositifs pour définir et stocker des fonctions de référence en relation avec la géométrie d'illumination de l'appareil radar, de l'intervalle de distance à mesurer, des plages d'angle de rotation, des impulsions d'emission et de la hauteur de l'antenne tournante par rapport au sol, et un dispositif de corrélation destiné à établir la corrélation entre les signaux de réception et les fonctions de référence, ainsi qu'un appareil d'affichage pour le résultat de la corrélation, caractérisé par le fait que les dispositifs de définition des fonctions de référence comportent les modules suivants:
   a) un module géométrique (10) dans lequel, à partir de l'angle d'ouverture et de l'angle de dépression (epsilon, théta) de l'antenne (3), de la longueur (1) du bras tournant et de la hauteur ($H_0$) de l'antenne (3) au-dessus du sol, on calcule la largeur (SW) d'une bande de distance (4; $R_{G2}$-$R_{G1}$) illuminée par l'antenne et l'écart de distance (delta $R_S$) entre les rayons ($R_{S2}$, $R_{S1}$) de l'antenne (3) par rapport au bord intérieur ou extérieur de la bande illuminée;
   b) un circuit (11 à 15) permettant de subdiviser la bande (4) illuminée en un nombre (N) déterminé d'intervalles de distance (6; $R_{G1}$ à $R_{Gn}$), ainsi
   c) qu'un module (15) permettant de définir les fonctions de référence (SR) pour les différents intervalles de distance (6; $R_{G1}$ à $R_{Gn}$)

2. Appareil radar selon la revendication 1. caractérisé par le fait que le circuit (11 - 14) pour la subdivision de la bande (4) illuminée comprend les modules suivants:
   a) un module (11) pour le calcul du nombre (N) d'intervalles de distance (6; $R_{gn}$) à l'intérieur de la bande (4) illuminée par division de l'écart de distance (delta $R_S$) calculé entre les rayons ($R_{S1}$, $R_{S2}$) depuis l'antenne (3) jusqu'au bord intérieur ou extérieur de la bande et de la résolution radiale (delta $R_{Smin}$) recherchée,
   b) un module (12) pour le calcul des distances par rapport au milieu ($R_{gn}$) de l'intervalle à l'intérieur de la bande (4) illuminée en fonction du nombre (N) des intervalles de distance,
   c) un module (13) pour le calcul du temps d'intégration ($T_{Sn}$) pour les différents intervalles de distance et
   d) un module (14) pour le calcul du nombre ($Z_{Sn}$) des impulsions d'émission correspondant au nombre de points de référence pour les fonctions de référence ($S_R$) et de la plage d'angle de rotation (delta alpha) pour les distances par rapport au milieu de l'intervalle ($R_{gn}$) en fonction du temps d'intégration.

3. Appareil radar selon la revendication 2, caractérisé par le fait que le module (11) pour le calcul du nombre (N) des intervalles de distance (6, $R_{gn}$) calcule en outre la durée de l'écho ($t_e$) par rapport à 2 delta $R_s$/C, C étant la vitesse de la lumière.

4. Appareil radar selon la revendication 2, caractérisé par le fait que le module (12) pour le calcul des distances par rapport au milieu de l'intervalle ($R_{gn}$) comporte un compteur (31) auquel on envoie le numéro (n) correspondant de l'intervalle de distance et un bloc fonctionnel (32) qui, à partir des signaux de sortie (N à $x_n$) du compteur (31), de la distance($R_{G1}$) au sol jusqu'au bord intérieur de la bande (4) illuminée et de la résolution radiale (delta $R_{Smin}$) souhaitée, calcule les distances ($R_{gn}$) par rapport au milieu de l'intervalle concerné d'après

$$R_{gn} = R_{G1} + X_n * \text{delta } R_{Smin}.$$

5. Appareil radar selon la revendication 2, caractérisé par le fait que le module (13) pour le calcul du temps d'intégration ($T_{Sn}$) comporte un compteur (33) auquel on envoie le nombre (N) des intervalles de distance et qui délivre le numéro (n) de l'intervalle de distance ($R_{gn}$) concerné et par le fait qu'à partir de ce numéro (n) et de l'intervalle de distance ($R_{gn}$) concerné et en tenant compte de l'angle d'ouverture (gamma) de l'antenne, de la longueur (L) du bras support (2) et de la vitesse angulaire (oméga zéro) de l'antenne (3), le module (13) calcule outre le temps d'intégration ($T_{Sn}$), l'ouverture synthétique (Sn) et la plage d'angle de rotation (alpha $S_n$) de l'antenne pour chaque intervalle de distance ($R_{gn}$) d'après:

$$S_n = \text{Gamma} * L * (1 - L/R_{gn}) \quad (a)$$

$$T_{Sn} = \frac{\text{Gamma} * (1 - L/R_{gn})}{\text{Oméga zéro}} \quad (b)$$

$$\text{Alpha}_{Sn} = \text{Gamma} * (1 - L/R_{gn}) \quad (c)$$

6. Appareil radar selon la revendication 2, caractérisé par le fait que le module (14) pour le calcul du nombre ($Z_{Sn}$) des impulsions d'émission et de la plage d'angle de rotation (delta alpha) comporte un compteur (34) auquel on envoie le nombre (N) des zones de distance ($R_{gn}$) et qui délivre le numéro (n) de l'intervalle de distance ($R_{gn}$) correspondant et par le fait qu'à partir de ce numéro, du temps d'intégration ($T_{Sn}$) et de la fréquence de répétition ($f_p$) des impulsions et en tenant compte de la vitesse angulaire (oméga zéro) de l'antenne (3), le module (14) calcule le nombre des points de référence ($Z_{Sn}$) et la longueur de pas angulaire (delta alpha) d'après:

$$Z_{Sn} = f_p * T_{Sn} \quad (a)$$

$$\text{Delta Alpha} = \text{Oméga zéro}/f_p \quad (b)$$

7. Appareil radar selon l'une des revendications précédentes, caractérisé par le fait que le module (15) pour la définition des fonctions de référence ($S_R$) comporte un compteur (37) auquel on envoie le nombre (N) des intervalles de distance ($R_{gn}$) et qui délivre le numéro (n) de l'intervalle de distance ($R_{gn}$) concerné et par le fait qu'à partir de ce numéro (n), de l'intervalle de distance ($R_{gn}$) concerné, de la longueur de pas angulaire (delta alpha), du point de référence ($Z_{Sn}$) concerné et de la hauteur ($H_0$) de l'antenne (3) au-dessus du sol et en tenant compte de la longueur d'onde (lambda) et de la longueur du bras support (2), le module (15) calcule la fraction réelle ($I_{Rn}$) et la fraction imaginaire ($Q_{Rn}$) des fonctions de référence ($S_R$) d'après:

$$\hat{I}_{Rn}(t) = \sum_{m=1}^{Z_s} \cos(4\,Pi/Lambda)\sqrt{L^2+R^2_{gn} - 2.L.R_{gn}} \cdot \cos(m.\,Delta\ Alpha) + H_0^2$$

$$\hat{Q}_{Rn}(t) = \sum_{m=1}^{Z_s} \sin(4\,P/Lambda)\sqrt{L^2+R^2_{gn} - 2.L.R_{gn}} \cdot \cos(m.\,Delta\ Alpha) + H_0^2.$$

8. Appareil radar selon l'une des revendications précédentes, caractérisé par le fait que le bras support (2) pour l'antenne (3) comporte dans la région de cette dernière un détecteur de mouvement (61) qui détermine les variations de hauteur du bras support (2) dans la région de l'antenne (3) et les fluctuations de la vitesse angulaire dudit bras support et par le fait qu'à partir des accélérations mesurées on introduit comme variable dans les fonctions de référence la hauteur ($H_0$) supposée constante à ce niveau et la vitesse angulaire (oméga zéro).

9. Appareil radar selon la revendication 8, caractérisé. par le fait que le détecteur de mouvement (61) comprend deux capteurs d'accélération (62, 63) qui sont sensibles dans deux directions mutuellement perpendiculaires, le premier capteur d'accélération (62) étant orienté dans une direction déterminante pour le débattement en hauteur du bras support (2) et l'autre capteur d'accélération (63) étant orienté dans le plan de rotation du bras support (2).

10. Appareil radar selon l'une des revendications précédentes, caractérisé par le fait que seules les antennes de réception (72) sont disposées sur le bras support (2) tournant et par le fait que l'antenne d'émission (71) est montée fixe par rapport à l'axe de rotation du bras support (2) sur le mât du rotor.

11. Appareil radar selon l'une des revendications précédentes, caractérisé par le fait que la transmission d'énergie en direction des antennes tournantes (3, 72) et la transmission des signaux en provenance des antennes tournantes (3, 72) a lieu sans contact par l'intermédiaire de l'axe de rotation du bras support (2).

12. Appareil radar selon la revendication 11, caractérisé par le fait que la transmission d'énergie en direction des antennes tournantes (3, 72) et la transmission des signaux en provenance desdites antennes tournantes (3, 72) a lieu par l'intermédiaire d'un système de coupleurs opto-electroniques (74, 76 , 77).

FIG. 1

Rotorblatt 2

Antenne 3

$\omega_0$

L

Elevation

$H_0$

$\varepsilon$

$\Theta$

1

...a

Azimut

IIa

$\gamma$

4

1

3

IIa

L

2

5

SW

...b

# FIG. 2

...a

...b

# FIG. 3

FIG. 4

$\Theta \quad \varepsilon \quad L$

$$\Theta_1 = \Theta + \frac{\varepsilon}{2} \qquad \Theta_1$$

$$\Theta_2 = \Theta - \frac{\varepsilon}{2} \qquad \Theta_2$$

$$R_{G0} = \frac{H_0}{\tan\Theta} + L \qquad R_{G0}$$

$$R_{G1} = \frac{H_0}{\tan\Theta_1} + L \qquad R_{G1}$$

$H_0$

$$R_{G2} = \frac{H_0}{\tan\Theta_2} + L \qquad R_{G2}$$

$$R_{S0} = \frac{H_0}{\sin\Theta} \qquad R_{S0}$$

$$R_{S1} = \frac{H_0}{\sin\Theta_1} \qquad R_{S1}$$

$$R_{S2} = \frac{H_0}{\sin\Theta_2} \qquad R_{S2}$$

$$\Delta R_S = R_{S2} - R_{S1} \qquad \Delta R_S$$

$$SW = R_{G2} - R_{G1} \qquad SW$$

## FIG. 5

$C \qquad \Delta R_{Smin}$

$\Delta R_S$

$$t_e = \frac{2 \cdot \Delta R_S}{C} \qquad (a) \qquad t_e$$

$$N = \frac{\Delta R_S}{\Delta R_{Smin}} \qquad (b) \qquad N$$

## FIG. 6

12

31

$N$

| Zähler |

$n \qquad x_n$    32   $\Delta R_{Smin}$

$R_{G1}$

$$R_{gn} = R_{G1} + x_n \cdot \Delta R_{Smin} \qquad R_{gn}$$

## FIG.7

$\underline{10}$

N

radiale
Richtung

1

$K_R = Z_{SN} \cdot Z_A \cdot 2U$

1

laterale Richtung

$Z_{SN}$

# FIG. 11a

$\underline{26}$

N

radiale
Richtung

1

$K_E = Z_B \cdot Z_A \cdot 2U$

1

laterale Richtung

$Z_B$

# FIG. 11b

↓N   $\underline{41}$

$\underline{7}$

Zähler

U $\hat{I}_{Rn}(t)$

U $\hat{Q}_{Rn}(t)$

n

$\omega_o$

$Z_B$

$\Delta\alpha$

$$S_{on}(t) = \frac{K}{\omega_o} \sum_{i=0}^{Z_B-1} \left[\hat{I}_{En}(i\cdot\Delta\alpha) + j\cdot\hat{Q}_{En}(i\cdot\Delta\alpha)\right] \cdot$$

$$\cdot \left[\hat{I}_{Rn}(i\cdot\Delta\alpha - m\cdot\Delta\alpha) - j\cdot\hat{Q}_{Rn}(i\cdot\Delta\alpha - m\cdot\Delta\alpha)\right]$$

$\hat{S}_{on}(t)$

U

U $\hat{I}_{En}(t)$

U $\hat{Q}_{En}(t)$

# FIG. 12

FIG. 8

13

$$S_n = \gamma \cdot L \cdot \left(1 - \frac{L}{R_{gn}}\right) \quad (a)$$

$$T_{Sn} = \frac{\gamma \cdot \left(1 - \frac{L}{R_{gn}}\right)}{\omega_o} \quad (b)$$

$$\alpha_{Sn} = \gamma \cdot \left(1 - \frac{L}{R_{gn}}\right) \quad (c)$$

Zähler

N    33    n

γ   L   ω_o

R_{gn}   →   S_n   T_{Sn}   α_{Sn}

FIG. 9

14

Zähler

N   34   n   ω_o   T_B   35

$$Z_{Sn} = f_p \cdot T_{Sn} \quad (a)$$

$$\Delta\alpha = \frac{\omega_o}{f_p} \quad (b)$$

$$Z_B = f_p \cdot T_B \quad (c)$$

T_{Sn}   f_p   →   Z_{Sn}   Δα   Z_B

FIG. 10

15   36   N   37

Zähler   n

$$\hat{I}_{Rn}(t) = \sum_{m=1}^{Z_s} \cos\left(\frac{4\pi}{\lambda}\sqrt{L^2 + R_{gn}^2 - 2 \cdot L \cdot R_{gn} \cdot \cos(m \cdot \Delta\alpha) + H_o^2}\right)$$

$$\hat{Q}_{Rn}(t) = \sum_{m=1}^{Z_s} \sin\left(\frac{4\pi}{\lambda}\sqrt{L^2 + R_{gn}^2 - 2 \cdot L \cdot R_{gn} \cdot \cos(m \cdot \Delta\alpha) + H_o^2}\right)$$

λ   L   π

R_{gn}   Δα   Z_{Sn}   H_o   →   $\hat{I}_{Rn}(t)$   $\hat{Q}_{Rn}(t)$

$$\lambda \quad L \quad \Delta\alpha \quad Z_S$$

$R_{Go} \gg L$ und $R_{Go} \leq H_0$ :

$$\hat{I}_R(t) = \sum_{m=1}^{Z_S} \cos\left[\frac{4\pi}{\lambda} \cdot \cos\Theta \cdot (1 - \cos m \cdot \Delta\alpha)\right]$$

$$\hat{Q}_R(t) = \sum_{m=1}^{Z_S} \cos\left[\frac{4\pi}{\lambda} \cdot \cos\Theta \cdot (1 - \cos m \cdot \Delta\alpha)\right]$$

51

$R_{Go} \gg L$ und $R_{Go} \gg H_0$ :

$$\hat{I}_R(t) = \sum_{m=1}^{Z_S} \cos\left\{\frac{4\pi}{\lambda} \cdot L \cdot [1 - \cos(m \cdot \Delta\alpha)]\right.$$

$$\hat{Q}_R(t) = \sum_{m=1}^{Z_S} \sin\left\{\frac{4\pi}{\lambda} \cdot L \cdot [1 - \cos(m \cdot \Delta\alpha)]\right.$$

$H_0$

52

fest verdrahtet

vollständige Lösung

53

# FIG. 13

FIG. 14

FIG. 15

FIG. 16

| Modulator | Koppler | Empf. |

Umsetzer